# EUROPÄISCHE PATENTSCHRIFT

(11) **EP 2 732 237 B1**
(45) Veröffentlichungstag und Bekanntmachung des Hinweises auf die Patenterteilung: **23.11.2016**
(21) Anmeldenummer: 12733470.4
(22) Anmeldetag: 04.07.2012
(51) Int. Cl.: G01B 21/04, G01B 21/20, G01B 5/20, G06T 17/10

(54) **KONTURMESSGERÄT UND VERFAHREN ZUR KONTURMESSUNG EINES WERKSTÜCKS MIT TANGENTIAL ANEINANDER ANSCHLIEßENDEN KONTURGEOMETRIEN**
CONTOUR METER AND METHOD FOR MEASURING THE CONTOUR OF A WORKPIECE HAVING TANGENTIALLY ADJOINING CONTOUR GEOMETRIES
APPAREIL DE MESURE DE CONTOUR ET PROCÉDÉ DE MESURE DU CONTOUR D'UNE PIÈCE PRÉSENTANT DES GÉOMÉTRIES DE CONTOUR JOINTES L'UNE À L'AUTRE TANGENTIELLEMENT

(30) Priorität: 13.07.2011 DE 102011051800
(43) Veröffentlichungstag der Anmeldung: 21.05.2014
(73) Patentinhaber: Carl Mahr Holding GmbH, 37073 Göttingen (DE)
(72) Erfinder: WEBER, Hero, 26129 Oldenburg (DE)
(74) Vertreter: Rüger, Barthelt & Abel
(86) Internationale Anmeldenummer: PCT/EP2012/063021
(87) Internationale Veröffentlichungsnummer: WO 2013/007569

(56) Entgegenhaltungen:
- DE-A1- 10 258 493
- DE-A1- 19 600 002
- DE-A1- 19 914 862
- DE-A1-102008 021 304
- JP-A- 10 311 710

## Beschreibung

Die vorliegende Erfindung betrifft ein Konturmessgerät sowie ein Verfahren zur Konturmessung. Die Kontur eines Werkstücks wird dabei zweidimensional oder alternativ auch dreidimensional erfasst. Das Konturmessgerät weist eine Tasteinrichtung zur Messung von Messpunkten entlang der zu erfassenden Werkstückkontur auf. Die Tasteinrichtung kann taktil oder berührungslos, beispielsweise optisch arbeiten. Beispielsweise kann als Konturmessgerät ein Tastschnittgerät dienen, das einen Messtaster aufweist, der entlang einer vorgegebenen Bahn der zu messenden Kontur bewegt wird. Ein Tastschnittgerät ist z.B. aus DE 10 2009020 294 A1 bekannt.

Alternativ kann die Kontur auch mit einem eine Bildverarbeitung aufweisenden Konturmessgerät erfasst werden, wie dies beispielsweise aus DE 10 2007 016 502 A1 bekannt ist. Dabei wird die zu erfassende Kontur des Werkstücks durch eine Kamera aufgenommen. Über eine Bildverarbeitung wird dann die Kontur des Werkstücks ermittelt. Hierzu wird in DE 10 2007 016 502 A1 vorgeschlagen, zunächst die Messaufgabe zu konfigurieren. Dabei wird der Messbereich festgelegt und dem Messbereich ein Werkzeugmodell zugeordnet.

DE 196 00 002 A1 beschreibt ein Verfahren für die integrale Geometrieprüfung von Werkstücken aus mehreren Formflächen, wobei die Werkstücke frei im dreidimensionalen Raum ausgerichtet werden können. Es werden mehrere Messpunkte auf der Außenfläche des Werkstücks und die konstruktiv vorgegebenen Toleranzbereiche verwendet, um die Maßhaltigkeit des Werkstücks zu prüfen. Wenn beispielsweise ein Toleranzwert nicht eingehalten wird, aber andere Toleranzwerte noch nicht ausgeschöpft sind, wird durch ein iteratives Verfahren versucht, die Orientierung von Abschnitten des Werkstücks im Raum so zu ändern, dass alle vorgegebenen Toleranzen der Abschnitte und zwischen den Abschnitten eingehalten bzw. minimiert werden. Dazu werden die Abschnitte des Werkstücks sozusagen in die Punktwolke des Messpunkte eingepasst, derart, dass entweder die Summe der Quadrate der Messpunktabstände vom eingepassten Werkstück minimal sind oder die Betragsmaxima der Messpunktabstände vom eingepassten Werkstück minimal sind.

Bei der Konturmessung, insbesondere bei der Verwendung eines entlang der Werkstückkontur bewegten Messtasters hat sich gezeigt, dass es schwierig ist, die Übergangsstellen zwischen zwei Konturgeometrien zu bestimmen, an denen die Konturgeometrien tangential aneinander anschließen. Dies kann beispielsweise ein tangentialer Übergang zwischen zwei kreisbogenförmigen Konturgeometrien oder der tangentiale Übergangs zwischen einer geraden Konturgeometrie und einer kreisbogenförmigen Konturgeometrie sein. Beim Vermessen der Werkstückkontur ist es nur sehr schwer möglich, die Übergangsstelle mit ausreichender Genauigkeit zu bestimmen. Dies führt wiederum dazu, dass es schwierig ist festzustellen, ob bei der Herstellung des Werkstücks der tangentiale Übergang mit der gewünschten Genauigkeit gefertigt wurde.

Es kann daher als eine Aufgabe der vorliegenden Erfindung angesehen werden, ein Konturmessgerät, Insbesondere ein Tastschnittgerät, und ein Verfahren zur Konturmessung zu schaffen, das eine exaktere Bestimmung von Übergangsstellen ermöglicht, an denen zwei Konturgeometrien der zu erfassenden Werkstückkontur tangential aneinander anschließen.

Diese Aufgabe wird durch ein Verfahren mit den Merkmalen des Patentanspruches 1 sowie ein Konturmessgerät mit den Merkmalen des Patentanspruches 13 gelöst.

Das zu vermessende Werkstück weist eine Werkstückkontur mit einer ersten Konturgeometrie und einer sich an einer ersten Übergangsstelle anschließenden zweiten Konturgeometrie auf. Es ist vorgegeben, dass die beiden Konturgeometrien an der ersten Übergangsstelle tangential aneinander anschließen sollen. Diese Information wird dem Konturmessgerät bzw. dem Verfahren vorgegeben.

Zunächst wird die zu vermessende Werkstückkontur in einer einzigen Messbewegung entlang der ersten Konturgeometrie und der zweiten Konturgeometrie gemessen, wobei eine Vielzahl von Messpunkten erfast werden. Anhand der aufgenommenen Messpunkte können die verschiedenen Konturgeometrien unterschieden werden. Jeder erkannten Konturgeometrie wird dann ein Ersatzelement zugeordnet. Befinden sich die in einer Konturgeometrie gemessenen Messpunkte auf einem Kreisbogen, wird dieser Konturgeometrie ein Kreis als Ersatzelement zugeordnet. Liegen die Messpunkte innerhalb einer Konturgeometrie auf einer Geraden, wird dieser Konturgeometrie eine Gerade zugeordnet. Da die erste Übergangsstelle zwischen der ersten Konturgeometrie und der zweiten Konturgeometrie noch nicht bekannt ist, wird bei einem bevorzugten Ausführungsbeispiel für die Bestimmung des jeweiligen Ersatzelements nur solche Messpunkte verwendet, die einen ausreichenden Mindestabstand zu den Messpunkten der Übergangsstelle aufweisen, und insbesondere zu den Messpunkten die für die Bestimmung des Ersatzelements der sich anschließenden Konturgeometrie verwendet wurden.

Im Anschluss daran wird die Lage und/oder die Größe des ersten Ersatzelements und/oder des zweiten Ersatzelements unter der Randbedingung ermittelt, dass das erste und das zweite Ersatzelement an der Übergangsstelle tangential aneinander anschließen. Es wird beispielsweise zunächst als erstes Ersatzelement ein Kreis oder eine Gerade bestimmt. Im Anschluss daran wird als zweites Ersatzelement beispielsweise ein Kreis unter der Bedingung berechnet, dass dieser tangential an das zuvor bestimmte erste Ersatzelement anschließt. Die tangentiale Anschlussstelle stellt dann die erste Übergangsstelle zwischen der ersten Konturgeometrie und der zweiten Konturgeometrie dar.

Gerade bei Radien, die sich lediglich entlang eines kleinen Winkelsegments erstrecken verbessert das erfindungsgemäße Verfahren die Reproduzierbarkeit der Ergebnisse deutlich.

Die Berechnung der Position der ersten Übergangsstelle wird vorzugsweise iterativ wiederholt, um die Genauigkeit zu erhöhen. In jedem Iterationsschritt können dabei andere oder zusätzliche Messpunkte innerhalb einer betreffenden Konturgeometrie zur Berechnung des zugeordneten Ersatzelements verwendet werden. Die iterative Berechnung der Position der ersten Übergangsstelle wird bevorzugt dann beendet, wenn eine Positionsänderung zwischen zwei aufeinanderfolgenden Positionsbestimmungen der ersten Übergangsstelle kleiner ist als ein vorgegebener Änderungsschwellenwert. Alternativ hierzu könnte die Anzahl der Iterationen auch vorgegeben werden.

Das zu vermessende Werkstück kann auch drei oder mehr Konturgeometrien aufweisen, wobei jeweils zwei benachbarte Konturgeometrien tangential aneinander anschließen. Bevorzugt wird hierbei das erste Ersatzelement einer ersten Konturgeometrie und das dritte Ersatzelement einer dritten Konturgeometrie bestimmt. Anschließend wird die Lage und/oder die Größe eines dazwischen liegenden zweiten Ersatzelements derart berechnet, dass das zweite Ersatzelement tangential an das erste Ersatzelement und das dritte Ersatzelement anschließt. Die Berechnung des zweiten Ersatzelements erfolgt mithin unter Berücksichtigung von zwei Randbedingungen.

Es ist ferner von Vorteil, wenn bei der Bestimmung eines Geometriehilfselments nur Messpunkte verwendet werden, die einen Mindestabstand von der Übergangsstelle bzw. den zur Berechnung des sich anschließenden Ersatzelements verwendeten Messpunkten aufweisen. Der Mindestabstand kann dabei variabel sein und verringert werden, wenn sich die Genaugkeit der Positionsbestimmung der Übergangsstelle zwischen zwei Konturgeometrien in Abhängigkeit von der der Anzahl der bereits durchgeführten iterativen Positionsbestimmung der betreffenden Übergangsstelle erhöht. Somit können bei nachfolgenden iterativen Positionsberechnungen der betreffenden Übergangsstellen auch solche Messpunkte berücksichtigt werden, die bei einer früheren Berechnung noch nicht verwendet werden konnten.

Anhand der berechneten Ersatzelemente der Konturgeometrien kann eine Sollkontur des Werkstücks ermittelt werden. Abhängig von der Sollkontur kann die Abweichung der über die Messpunkte tatsächlich gemessenen Istkontur des Werkstücks von der Sollkontur ermittelt und beispielsweise über eine Anzeigeeinrichtung des Konturmessgeräts den Bediener grafisch angezeigt werden.

Es ist auch möglich, das erfindungsgemäße Verfahren bei flächigen tangentialen Übergängen zwischen zwei benachbarten flächigen Konturgeometrien zu verwenden. Eine flächige Konturgeometrie kann beispielsweise durch einen Abschnitt einer Zylindermantelfläche oder eine Ebene gebildet sein. Bei der Konturmessung werden mehrere linienförmige Messungen zur Erfassung der Fläche durchgeführt. Der tangentiale Übergang kann beispielsweise zwischen einer Ebene und einem Abschnitt einer Zylindermantelfläche oder zwischen zwei aneinander anschließenden Abschnitten zweier Zylindermantelflächen erfolgen. Die Übergangsstelle wird analog zu den vorstehend beschriebenen Verfahren ermittelt.

Zur Berechnung eines Kreises als Ersatzelement kann die Methode der kleinsten Quadrate (häufig auch als "method of least squares" bezeichnet) verwendet werden. Alternativ ist es auch möglich, durch andere mathematische Kriterien, wie z.B. Hüllkriterien (Hüllkreis, also der kleinste umschriebene Kreis), Pferchkriterien (Pferchkreis, also der größte eingeschriebene Kreis) oder Minimumkriterien (Minimum- oder Tschebyscheff-Kreis mit der kleinsten Fläche) einen Kreis als Ersatzelement zu bestimmen. Über diese Ersatzkreisbestimmung und die Nebenbedingung sich tangential aneinander anschließender Ersatzelemente kann daraus die Übergangsstelle ermitteln werden.

Vorteilhafte Ausgestaltungen der Erfindung ergeben sich aus den abhängigen Patentansprüche und der Beschreibung. Die Beschreibung erläutert die Erfindung anhand von bevorzugten Ausführungsbeispielen und beschränkt sich auf wesentliche Merkmale der Erfindung und sonstiger Gegebenheiten. Die Zeichnung ist ergänzend heranzuziehen. Es zeigen:
Figur 1 ein Ausführungsbeispiel eines Konturmessgeräts in schematischer, blockschaltbildähnlicher Darstellung,
Figur 2 bei einem Verfahren zur Konturmessung aufgenommene Messpunkte entlang einer zu vermessenden Werkstückkontur in beispielhafter, schematischer und nicht maßstäblicher Darstellung,
Figur 3 die anhand der erkannten Konturgeometrien berechneten Ersatzelemente,
Figur 4 die Darstellung der Ergebnisse einer Konturmessung anhand eines Verfahrens nach dem Stand der Technik,
Figur 5 die Ergebnisse der Konturmessung einer Werkstückkontur anhand des erfindungsgemäßen Verfahrens und
Figur 6 das Flussdiagramm eines Ausführungsbeispiels eines erfindungsgemäßen Verfahrens zur Konturmessung.

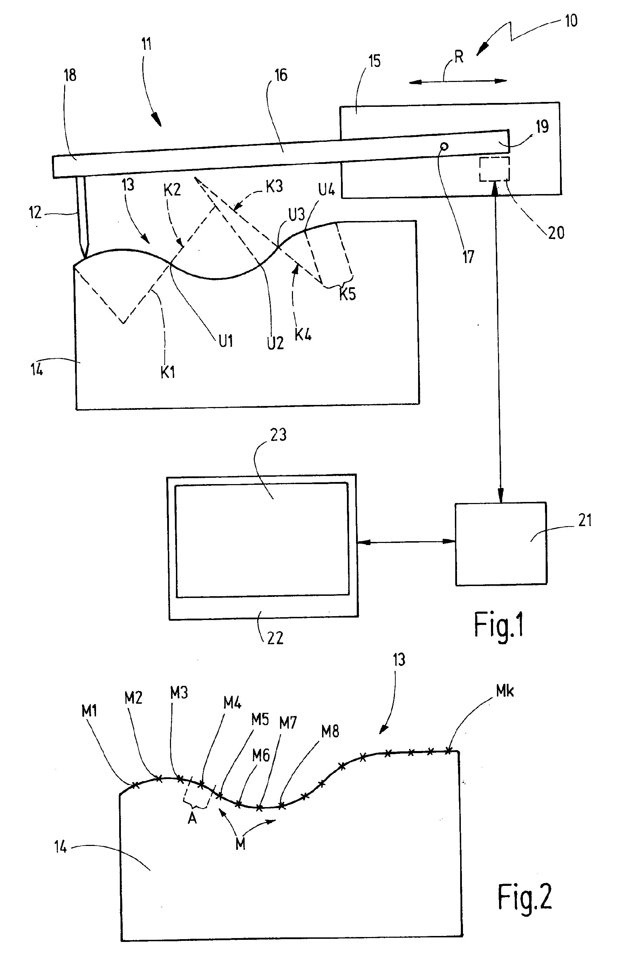

In Figur 1 ist äußerst vereinfacht ein Blockschaltbild eines Konturmessgeräts 10 dargestellt. Das Konturmessgerät 10 weist eine Tasteinrichtung 11 mit einem Messtaster 12 auf, der zur Messung einer Werkstückkontur 13 eines Werkstücks 14 entlang der Werkstückkontur 13 bewegt werden kann. Beim Ausführungsbeispiel ist das Konturmessgerät 10 als Tastschnittgerät ausgeführt. Das Konturmessgerät 10 verfügt über einen linear in eine Messrichtung R bewegbaren Schlitten 15, an den ein Tastarm 16 um eine Schwenkachse 17 schwenkbar gelagert ist. Der Tastarm 16 erstreckt sich ausgehend von der Schwenkachse 17 zu seinem ersten Ende 18 hin, an dem der Messtaster 12 angeordnet ist. An seinem dem ersten Ende 18 entgegengesetzten zweiten Ende 19 ist dem Tastarm 16 ein Messwertaufnehmer 20 zugeordnet, der die Schwenkstellung des Tastarms 16 um die Schwenkachse 17 erfasst. Die Messwerte des Messwertaufnehmers 20 werden an eine Steuereinrichtung 21 übermittelt. Die Steureinrichtung 21 ist mit einer Bedieneinheit 22 verbunden. Die Bedieneinheit 22 umfasst Eingabemittel und/oder Ausgabemittel als Bedienschnittstelle zu einer Bedienperson. Die Ausgabemittel enthalten beim Ausführungsbeispiel eine Anzeigeeinrichtung 23, beispielsweise ein Display.

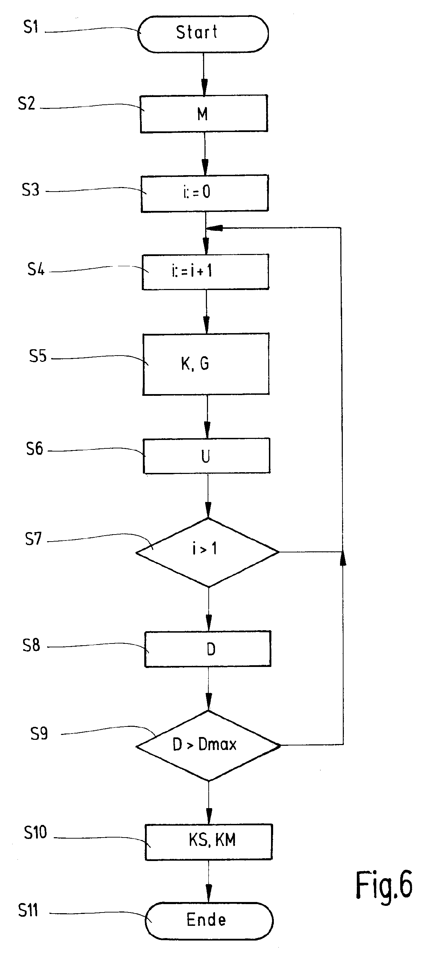

Die Steuereinrichtung 21 ist dazu eingerichtet, das erfindungsgemäß Verfahren zur Konturmessung durchzuführen. Ein bevorzugter Verfahrensablauf ist im Flussdiagramm nach Figur 6 dargestellt und wird nachfolgend unter Bezugnahme auf die Figuren 2 bis 5 erläutert.

Ein Werkstück 14 wird zur Messung der Werkstückkontur 13 in eine Einspannvorrichtung des Konturmessgeräts 10 eingespannt. Anschließend wird das Verfahren zur Konturmessung in einem ersten Verfahrensschritt S1 gestartet. Beim Ausführungsbeispiel wird in einem zweiten Verfahrensschritt S2 der Messtaster 12 entlang der Werkstückkontur 13 bewegt. Hierfür wird der Schlitten 15 in Messrichtung R verfahren. Abhängig vom Konturverlauf wird der Tastarm 16 um die Schwenkachse 17 ausgelenkt, was vom Messwertaufnehmer 20 erfasst und an die Steuereinrichtung 21 übermittelt wird. Auf diese Weise werden entlang der Werkstückkontur 13 eine Vielzahl von Messpunkten M erfasst, wie dies äußerst schematisiert in Figur 2 veranschaulicht ist. Beispielsgemäß werden k Messpunkte M1 bis Mk entlang der Werkstückkontur 13 gemessen.

Beispielsgemäß wird in einem dritten Verfahrensschritt S3 anschließend eine Zählvariable i auf null gesetzt und in einem nachfolgenden vierten Verfahrensschritt S4 um eins inkrementiert.

Im anschließenden fünften Verfahrensschritt S5 werden anhand der erfassten Messpunkte M aneinander anschließende Konturgeometrien K der Werkstückkontur 13 ermittelt, wobei bei dem hier schematisch veranschaulichten Werkstück 14 fünf Konturgeometrien K1 bis K5 schematisch veranschaulicht sind. Die Anzahl der Konturgeometrien hängt vom Werkstück 14 ab und ist grundsätzlich beliebig.

Das Werkstück 14 weist eine Sollkontur KS auf, bei der die Konturgeometrien K an Übergangsstellen U tangential aneinander anschließen. Die erste Konturgeometrie K1 schließt an einer ersten Übergangsstelle U1 tangential an zweite Konturgeometrie K2 an. Die zweite Konturgeometrie K2 schließt an einer zweiten Übergangsstelle U2 wiederum tangential an die dritte Konturgeometrie K3 an usw. Die Anzahl dieser Übergangsstellen U, an der jeweils zwei benachbarte Konturgeometrien K tangential aneinander anschließen hängt vom Werkstück 14 ab und ist grundsätzlich beliebig. Ein tangentialer Übergang kann beispielsweise zwischen zwei kreisbogenförmig konturierten Konturgeometrien erfolgen, wie dies an der ersten Übergangsstelle U1 oder der zweiten Übergangsstelle U2 bei dem hier beschriebenen Ausführungsbeispiel beispielhaft dargestellt ist. Ein tangentialer Übergang kann auch zwischen einer geradlinig verlaufenden Konturgeometrie und einer kreisbogenförmig verlaufenden Konturgeometrie erfolgen, wie dies an der vierten Übergansstelle U4 zwischen der vierten Konturgeometrie K4 und der fünften Konturgeometrie K5 veranschaulicht ist.

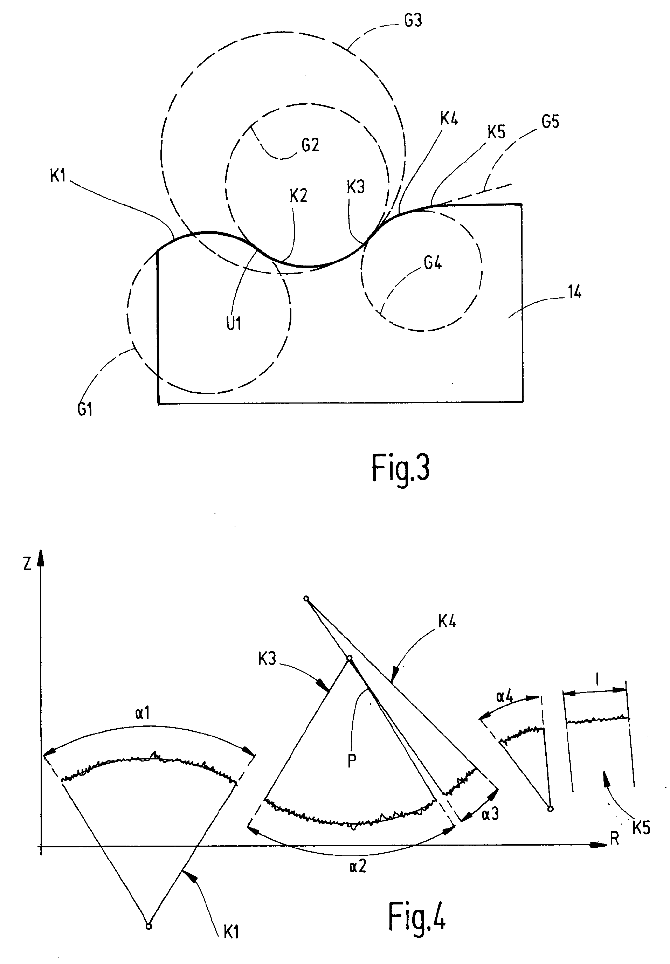

Im fünften Verfahrensschritt S5 sind die Positionen der Übergangsstellen U noch unbekannt. Anhang der Messpunkte M kann jedoch erkannt werden, ob die zugeordnete Konturgeometrie K entlang eines Kreisbogens oder entlang einer Geraden verläuft. Im fünften Verfahrensschritt S5 wird jeder Konturgeometrie K jeweils ein Ersatzelement G zugeordnet. Diese Zuordnung ist schematisch in Figur 3 veranschaulicht.

Anhand der Messpunkte M1 bis M3 wird beispielsweise festgestellt, dass sich die Kontur der ersten Konturgeometrie K1 entlang eines Kreisbogens erstreckt. Als erstes Ersatzelement G1 wird der ersten Konturgeometrie K1 daher ein Kreis zugeordnet. Gleichermaßen wird beispielsweise anhand der Messpunkte M5, M6 und M7 festgestellt, dass sich auch die zweite Konturgeometrie K2 entlang eines Kreisbogens erstreckt, so dass der zweiten Konturgeometrie K2 ebenfalls ein Kreis als zweites Ersatzelement G2 zugeordnet wird. Auch der dritten Konturgeometrie K3 und der vierten Konturgeometrie K4 wird jeweils ein Kreis als drittes Ersatzelement G3 und viertes Ersatzelement G4 zugeordnet. Die fünfte Konturgeometrie K5 erstreckt sich geradlinig, so dass der fünften Konturgeometrie K5 eine Gerade als fünftes Ersatzelement G5 zugeordnet wird.

Da in diesem fünften Verfahrensschritt S5 die Position der Übergangsstellen U1 bis U4 noch unbekannt ist, werden bei der Entscheidung, welches Ersatzelement einer Konturgeometrie K1 bis Kx zugeordnet wird nur solche Messpunkte M verwendet, die einen Mindestabstand A zu den Messpunkten M aufweisen, die zur Bestimmung des Ersatzelements G für die benachbarte Konturgeometrie K verwendet werden. In Figur 2 ist dies sehr stark schematisiert veranschaulicht. Der vierte Messpunkt M4 bleibt beispielsweise im fünften Verfahrensschritt S5 außer Betracht, weil er nicht den erforderlichen Mindestabstand A zum dritten Messpunkt M3 und zum fünften Messpunkt M 5 aufweist. Der dritte Messpunkt M3 wurde zur Bestimmung des ersten Geometrieelements und der fünfte Messpunkt M5 zur Bestimmung des zweiten Ersatzelement G2 verwendet. Weder zum dritten Messpunkt M3, noch zum fünften Messpunkt M5 weist der vierte Messpunkt M4 einen ausreichenden Mindestabstand A auf und wird daher bei der Ermittlung der Ersatzelemente G1 und G2 nicht berücksichtigt.

Bei einer bevorzugten Ausführungsvariante des Verfahrens wird das kreisförmige zweite Ersatzelement G2 so berechnet, dass es tangential in das kreisförmige erste Ersatzelement G1 übergeht bzw. an dieses anschließt. Der Punkt, an dem die beiden benachbarten Ersatzelemente G1, G2 tangential ineinander übergehen stellt die erste Übergangsstelle U1 dar. Gleichermaßen kann das kreisförmige dritte Ersatzelement G3 so berechnet werden, dass es sich tangential an das zweite Ersatzelement D2 anschließt, woraus sich die zweite Übergangsstelle U2 ergibt. Dies wird für alle aneinander anschließenden Ersatzelemente G1 bis G5 durchgeführt.

In Abwandlung hierzu ist es auch möglich in einem ersten Schritt jedes zweite Ersatzelement, beispielsweise das erste Ersatzelement G1, das dritte Ersatzelement G3 und das fünfte Ersatzelement G5 zu ermitteln. Im Anschluss daran können die dazwischen liegenden Ersatzelemente G2, G4 unter Berücksichtigung von jeweils zwei Randbedingungen ermittelt werden, nämlich dass sie an der jeweils benachbarten Ersatzelement G1, G3 bzw. G3, G5 tangential anschließen.

Auf diese Weise werden in einem sechsten Verfahrensschritt S6 die Übergangsstellen U bestimmt, an denen die Konturgeometrien K tangential aneinander anschließen.

In der Regel ist diese erste Berechnung der Übergangsstellen U allerdings noch nicht genau genug. Beim bevorzugten Ausführungsbeispiel wird daher iterativ die Genauigkeit der Berechnung der Übergangsstellen U erhöht. Hierfür wird in einem siebten Verfahrensschritt S7 zunächst abgefragt, ob es sich um die erste Berechnung der Übergangsstellen U handelt. Zu diesem Zweck wird geprüft, ob die Zellvariable i größer ist als 1. Ist dies nicht der Fall (Verzweigung N), so wird zum vierten Verfahrensschritt S4 zurückgesprungen. Andernfalls wird das Verfahren im achten Verfahrensschritt S8 fortgesetzt (Verzweigung Y).

Im achten Verfahrensschritt S8 wird die Positionsabweichung D zwischen zwei in aufeinanderfolgenden Iterationen für jede Übergangsstelle U berechnet. In einem daran anschließenden neunten Verfahrensschritt S9 wird dann abgefragt, ob die Positionsabweichung D größer ist als ein vorgegebener Änderungsschwellenwert Dmax. Ist dies der Fall (Verzweigung Y), so wird zum vierten Verfahrensschritt S4 zurückgesprungen. Andernfalls wird das Verfahren in einem zehnten Verfahrensschritt S10 fortgesetzt.

Wenn im siebten Verfahrensschritt S7 oder im neunten Verfahrensschritt S9 zum vierten Verfahrensschritt S4 zurückgesprungen wird, erfolgt eine neue Iteration der Berechnung der Position der Übergangsstellen U in den Verfahrensschritten S5 und S6. Dabei werden zusätzliche oder andere Messpunkte M bei der Ermittlung der Ersatzelemente verwendet, als in den vorangegangenen Berechnungsiterationen. Auf diese Weise kann bei jeder Iterationsschleife die Genauigkeit der Berechnung der Übergansstellen U erhöht werden.

Wurde schließlich eine ausreichende Genauigkeit erreicht, wird dies beim bevorzugten Ausführungsbeispiel dadurch erkannt, dass sich die ermittelte Position der Übergangsstellen U in zwei aufeinander folgenden Berechnungsinterationen nur noch geringfügig ändert und die Positionsänderung D kleiner ist als ein vorgegebenen Änderungsschwellen Dmax. Es ist auch möglich, dass die Anzahl der Iterationen für die Berechnung der Position verschiedener Übergangsstellen U1, U2, U3, U4 unterschiedlich groß ist, um die gewünschte Genauigkeit zu erreichen.

Wurde für aller Übergangsstellen U eine ausreichende Genauigkeit der Positionsbestimmung erkannt (Verzweigung N aus dem neunten Verfahrensschritt S9), so wird das Messergebnis im zehnten Verfahrensschritt S10 über die Anzeigeeinrichtung 23 ausgegeben. Beim Ausführungsbeispiel besteht das Messergebnis aus einer Sollkontur KS der Werkstückkontur 13, die anhand der an den Übergangsstellen U aneinander anschließenden Ersatzelemente G ermittelt wird. Zusätzlich zu dieser Sollkontor KS wird auch die anhand der Messpunkte M gemessene Istkontur KM ausgegeben. Daraus ist dann auch die Abweichung zwischen der Sollkontur KS und der Istkontur KM ersichtlich.

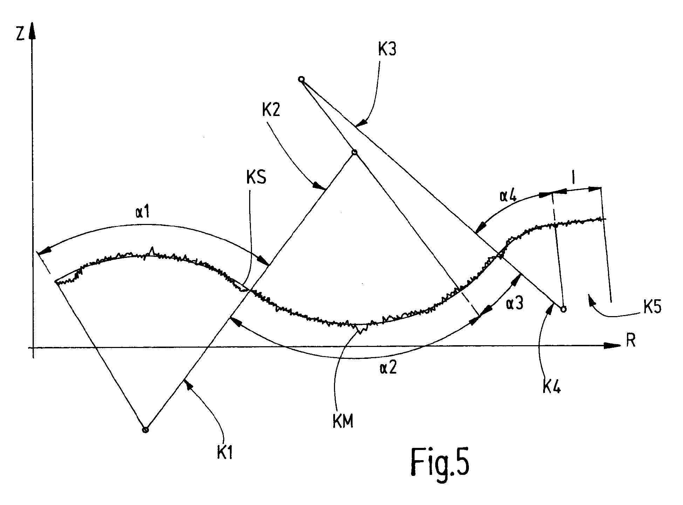

Ein Beispiel für eine grafische Darstellung zur Anzeige des Messergebnisses ist in Figur 5 veranschaulicht. Dort ist über dem Weg in Messrichtung R die Höhe z rechtwinkelig zur Messrichtung R angegeben. Auch die Übergangsstellen U zwischen zwei tangential aneinander anschließenden Konturgeometrien K sind dargestellt. Zusätzlich können auch Kreisbogenwinkel α oder Längen l dargestellt werden.

Zum Vergleich veranschaulicht Figur 4 das Ergebnis einer Einzelmessung der Konturgeometrien K unabhängig voneinander. Dabei ist auch zu erkennen, dass die Bereiche an den jeweiligen Übergangstellen nicht oder mit nur unzureichender Genauigkeit vermessen werden können. Bei diesem Beispiel schneiden sich beispielsweise die Radiallinien der zweiten Konturgeometrie K2 und der dritten Konturgeometrie K3 in einem Schnittpunkt P, was bei tangential aneinander anschließenden Konturgeometrien K nicht möglicht ist. Ein Vergleich der Istkontur KM mit der Sollkontur KS an den Übergangsstellen U ist bei einer solchen Einzelmessung nicht oder nur unzureichend möglich.

Im Anschluss an die Ausgabe des Messergebnisses wird das Verfahren in einem elften Verfahrensschritt S11 beendet.

In Abwandlung zu dem hier beschriebenen Ausführungsbeispiel können auch flächenhafte tangentiale Übergänge zwischen zwei benachbarten flächigen Konturgeometrien auf dieselbe Weise ermittelt werden. Eine flächige Konturgeometrie kann beispielsweise durch einen Abschnitt einer Zylindermantelfläche oder eine Ebene gebildet werden. Dabei werden mehrere parallel zueinander versetzte Konturmessungen durchgeführt. Der tangentiale Übergang kann beispielsweise zwischen einer Ebene und einem Abschnitt einer Zylindermantelfläche oder zwischen zwei aneinander anschließenden Abschnitten zweier Zylindermantelflächen erfolgen.

Bei einer weiteren Abwandlung kann als Ersatzelement auch ein Punkt verwendet und beispielsweise der tangentiale Anschluss an diesen Punkt als Randbedingung für die Berechnung eines sich anschließenden weiteren Ersatzelements verwendet werden.

Die Erfindung betrifft ein Konturmessgerät 10, sowie ein Verfahren zur Konturmessung einer Werkstückkontur 13. Die Werkstückkontur 13 weist mehrere Konturgeometrien K auf. Zumindest eine erste Konturgeometrie K1 und eine zweite Konturgeometrie K2 schließen an einer ersten Übergangsstelle U1 tangential aneinander an. Zunächst werden entlang der ersten Konturgeometrie K1 und der zweiten Konturgeometrie K2 eine Vielzahl von Messpunkten M aufgenommen. Auf Basis eines Teils der Messpunkte innerhalb der ersten Konturgeometrie K1 wird ein erstes Ersatzelement G1 ermittelt und der ersten Konturgeometrie K1 zugeordnet. Analog hierzu wird auf Basis von einigen Messpunkten M der zweiten Konturgeometrie K2 ein dieser zugeordnetes zweites Geometrieelement G2 ermittelt. Die Berechnung der Größe und/oder der Lage des zweiten Geometrieelements G2 erfolgt unter der Randbedingung, dass sich das zweite Ersatzelement G2 tangential an das erste Ersatzelement G1 anschließt. Der tangentiale Übergangspunkt zwischen den beiden Ersatzelementen G1, G2 bildet die auf diese Weise ermittelte erste Übergangsstelle U1. Dieses Verfahren kann unter zur Hilfenahme zusätzlicher oder anderen Messpunkte M iterativ wiederholt werden, bis eine ausreichend genaue Positionsbestimmung der ersten Übergangsstelle U1 erfolgt ist.

### Bezugszeichenliste:

- 10: Konturmessgerät
- 11: Tasteinrichtung
- 12: Messtaster
- 13: Werkstückkontur
- 14: Werkstück
- 15: Schlitten
- 16: Tastarm
- 17: Schwenkachse
- 18: erstes Ende
- 19: zweites Ende
- 20: Messwertaufnehmer
- 21: Steuereinrichtung
- 22: Bedieneinheit
- 23: Anzeigeeinrichtung

- A: Mindestabstand
- D: Positionsabweichung
- i: Zählvariable
- KS: Sollkontur
- KM: Istkontur
- M: Messpunkt
- P: Schnittpunkt
- R: Messrichtung
- S1...S11: Verfahrensschritt
- U: Übergangsstelle

## Patentansprüche

1. Verfahren zur Konturmessung eines Werkstücks (14) mit einer ersten Konturgeometrie (K1) und einer zweiten Konturgeometrie (K2) und einer ersten Übergangsstelle (U1), an der die erste und die zweite Konturgeometrie (K1, K2) aneinander anschließen, wobei der Anschluss an der ersten Übergangsstelle (U1) tangential verlaufen soll, mit folgenden Schritten:
(a) Messen von mehreren Messpunkten (M) entlang der ersten Konturgeometrie (K1) und der zweiten Konturgeometrie (K2),
(b) Bestimmen eines ersten Ersatzelements (G1) für die erste Konturgeometrie (K1) anhand wenigstens eines Messpunkts (M) im Bereich der ersten Konturgeometrie (K1),
(c) Bestimmen eines zweiten Ersatzelements (G2) für die zweite Konturgeometrie (K2) anhand wenigstens eines Messpunkts (M) im Bereich der zweiten Konturgeometrie (K2),
(d) Berechnen der Lage und/oder Größe des ersten Ersatzelements (G1) und/oder zweiten Ersatzelements (G2) unter der Randbedingung, dass das erste Ersatzelement (G1) und das zweite Ersatzelement (G2) tangential aneinander anschließen,
(e) Bestimmen der Position der ersten Übergangsstelle (U1) an der Stelle, an der das erste Ersatzelement (G1) und das zweite Ersatzelement (G2) tangential aneinander anschließen.

2. Verfahren nach Anspruch 1,
**dadurch gekennzeichnet, dass** die Schritte (b) bis (e) jeweils unter Verwendung anderer oder zusätzlicher Messpunkte (M) für die Bestimmung des ersten Ersatzelements (G1) und/oder des zweiten Ersatzelements (G2) wiederholt werden, bis die Positionsänderung (D) zwischen zwei aufeinander folgenden Positionsbestimmungen der ersten Übergangsstelle (U1) kleiner ist als ein vorgegebener Änderungsschwellenwert (Dmax).

3. Verfahren nach Anspruch 1,
**dadurch gekennzeichnet, dass** das zu vermessende Werkstück (14) eine dritte Konturgeometrie (K3) aufweist, die an einer zweiten Übergangsstelle (U2) an die zweite Konturgeometrie (K2) anschließt, wobei der Anschluss an der zweiten Übergangsstelle (U2) tangential verlaufen soll, wobei im Schritt (d) die Berechnung der Lage und/oder Größe des ersten Ersatzelements (G1) und/oder zweiten Ersatzelements (G2)und/oder dritten Ersatzelements (G3) unter der Randbedingung erfolgt, dass sowohl das erste und das zweite Ersatzelement (G1, G2) als auch das zweite und das dritte Ersatzelement (G2, G3) tangential aneinander anschließen.

4. Verfahren nach Anspruch 1,
**dadurch gekennzeichnet, dass** einer sich entlang eines Kreisbogens erstreckenden Konturgeometrie (K1, K2, K3, K4) als Ersatzelement (G1, G2, G3, G4) ein Kreis zugeordnet wird.

5. Verfahren nach Anspruch 4,
**dadurch gekennzeichnet, dass** zur Bestimmung des Kreises als Geomentriehilfselement (G1, G2, G3, G4) mindestens drei Messpunkte der zugeordneten Konturgeometrie (K1, K2, K3, K4) gemessen werden.

6. Verfahren nach Anspruch 1,
**dadurch gekennzeichnet, dass** einer geradlinig erstreckenden Konturgeometrie (K5) als Ersatzelement (G5) eine Gerade zugeordnet wird.

7. Verfahren nach Anspruch 6,
**dadurch gekennzeichnet, dass** zur Bestimmung der Gerade als Geomentriehilfselement (G5) mindestens drei Messpunkte der zugeordneten Konturgeometrie (K5) gemessen werden.

8. Verfahren nach Anspruch 1,
**dadurch gekennzeichnet, dass** bei der Bestimmung eines Ersatzelements (G1) nur Messpunkte (M1, M2, M3) verwendet werden, die einen Mindestabstand (A) von der Übergangsstelle (U1) oder den Übergangsstellen aufweisen, an der die dem Ersatzelement (G1) zugeordnete Konturgeometrie (K1) an eine benachbarte Konturgeometrie (K2) anschließt.

9. Verfahren nach Anspruch 8,
**dadurch gekennzeichnet, dass** der Mindestabstand variabel ist und reduziert wird, je kleiner die Positionsänderung zwischen zwei aufeinanderfolgenden Berechnungen der betreffenden Übergangsstelle (U) ist.

10. Verfahren nach Anspruch 1,
**dadurch gekennzeichnet, dass** nach der Bestimmung der Übergangsstelle (U) anhand der ermittelten Ersatzelemente (G) eine Sollkontur (KS) bestimmt wird.

11. Verfahren nach Anspruch 10,
**dadurch gekennzeichnet**, die Abweichung zwischen den Messpunkten (M) und der Sollkontur (KS) bestimmt wird.

12. Verfahren nach Anspruch 10,
**dadurch gekennzeichnet** die Sollkontur (KS) und die sich aus den Messpunkten (M) ergebende Istkontur (KM) des Werkstücks (14) auf einer Anzeigeeinrichtung (23) grafisch dargestellt werden.

13. Konturmessgerät (10) zur Konturmessung eines Werkstücks (14) mit einer ersten Konturgeometrie (K1), einer zweiten Konturgeometrie (K2) und einer ersten Übergangsstelle (U1), an der die erste Konturgeometrie (K1) und die zweite Konturgeometrie (K2) aneinander anschließen, wobei der Anschluss an der ersten Übergangsstelle (U1) tangential verlaufen soll,
mit einer Tasteinrichtung (11) zur Messung mehrer Messpunkte (M) entlang der zu messenden Kontur (13) des Werkstücks (14),
mit einer Steuereinrichtung (21), die dazu eingerichtet ist folgenden Schritte durchzuführen:
(a) Messen von mehreren Messpunkten (M) entlang der ersten Konturgeometrie (K1) und der zweiten Konturgeometrie (K2),
(b) Bestimmen eines ersten Ersatzelements (G1) für die erste Konturgeometrie (K1) anhand wenigstens eines Messpunkts (M) im Bereich der ersten Konturgeometrie (K1),
(c) Bestimmen eines zweiten Ersatzelements (G2) für die zweite Konturgeometrie (K2) anhand wenigstens eines Messpunkts (M) im Bereich der zweiten Konturgeometrie (K2),
(d) Berechnen der Lage und/oder Größe des ersten und/oder zweiten Ersatzelements (G2) unter der Randbedingung, dass das erste Ersatzelement (G1) und das zweite Ersatzelement (G2) tangential aneinander anschließen,
(e) Bestimmen der Position der ersten Übergangsstelle (U1) an der Stelle, an der das erste und das zweite Ersatzelement (G2) tangential aneinander anschließen.

14. Konturmessgerät (10) nach Anspruch 13,
**dadurch gekennzeichnet, dass** die Steuereinrichtung dazu eingerichtet ist, die Schritte (b) bis (e) jeweils unter Verwendung anderer oder zusätzlicher Messpunkte (M) für die Bestimmung des ersten Ersatzelements (G1) und/oder des zweiten Ersatzelements (G2) zu wiederholen, bis die Positionsänderung (D) zwischen zwei aufeinander folgenden Positionsbestimmungen der ersten Übergangsstelle (U1) kleiner ist als ein vorgegebener Änderungsschwellenwert (Dmax).

15. Konturmessgerät nach Anspruch 13,
**dadurch gekennzeichnet, dass** die Tasteinrichtung (11) einen entlang der zu messenden Werkstückkontur (13) bewegbaren taktilen oder optischen Messtaster (12) aufweist.

## Claims

1. Method for measuring the contour of the workpiece (14) with a first contour geometry (K1) and a second contour geometry (K2), and with a first transition point (U1) at which the first and the second contour geometries (K1, K2) adjoin each other, wherein the junction at the first contour point (U1) runs tangentially, with the following steps:
(a) measurement of several measurement points (M) along the first contour geometry (K1) and the second contour geometry (K2),
(b) determination of a first substitute element (G1) for the first contour geometry (K1) using at least one measurement point (M) in the region of the first contour geometry (K1),
(c) determination of the second substitute element (G2) for the second contour geometry (K2) using at least one measurement point (M) in the region of the second contour geometry (K2),
(d) calculation of the position and/or size of the first substitute element (G1) and/or the second substitute element (G2) under the boundary condition that the first substitute element (G1) and the second substitute element (G2) adjoin each other tangentially,
(e) determination of the position of the first transition point (U1) at the point at which the first substitute element (G1) and the second substitute element (G2) adjoin each other tangentially.

2. Method according to claim 1, **characterised in that** steps (b) to (e) are repeated using other or additional measurement points (M) for determining the first substitute element (G1) and/or the second substitute element (G2), until the position change (D) between two successive position determinations of the first transition point (U1) is less than a predefined change threshold (Dmax).

3. Method according to claim 1, **characterised in that** the workpiece (14) to be measured has a third contour geometry (K3) which adjoins the second contour geometry (K2) at a second transition point (U2), wherein the junction at the second transition point (U2) runs tangentially, wherein in step (d) the calculation of the position and/or size of the first substitute element (G1) and/or the second substitute element (G2) and/or the third substitute element (G3) takes place under the boundary condition that both the first and the second substitute elements (G1, G23), and also the second and third substitute elements (G2, G3), adjoin each other tangentially.

4. Method according to claim 1, **characterised in that** a circle is assigned as a substitute element (G1, G2, G3, G4) to a contour geometry (K1, K2, K3, K4) extending along an arc.

5. Method according to claim 4, **characterised in that** to determine the circle, as a geometric aid element (G1, G2, G3, G4) at least three measurement points of the assigned contour geometry (K1, K2, K3, K4) are measured.

6. Method according to claim 1, **characterised in that** a straight line is assigned as a substitute element (G5) to a contour geometry (K5) extending rectilinearly.

7. Method according to claim 6, **characterised in that** to determine the straight line, as a geometric aid element (G5) at least three measurement points of the assigned contour geometry (K5) are measured.

8. Method according to claim 1, **characterised in that** in the determination of the substitute element (G1), only measurement points (M1, M2, M3) are used which have a minimum distance (A) from the transition point (U1) or transition points at which the contour geometry (K1) assigned to the substitute element (G1) adjoins an adjacent contour geometry (K2).

9. Method according to claim 8, **characterised in that** the minimum distance is variable and is reduced, the smaller the position change between two successive calculations of the transition point (U) concerned.

10. Method according to claim 1, **characterised in that** after determining the transition point (U), a nominal contour (KS) is determined using the substitute elements (G) obtained.

11. Method according to claim 10, **characterised in that** the deviation between the measurement points (M) and the nominal contour (KS) is determined.

12. Method according to claim 10, **characterised in that** the nominal contour (KS) and the actual contour (KM) of the workpiece (14) resulting from the measurement points (M) are depicted graphically on an indicator device (23).

13. Contour meter (10) for measuring the contour of the workpiece (14) with a first contour geometry (K1), a second contour geometry (K2) and a first transition point (U1) at which the first contour geometry (K1) and the second contour geometry (K2) adjoin each other, wherein the junction at the first transition point (U1) runs tangentially,
with a sensing device (11) for measuring several measurement points (M) along the contour (13) to be measured of the workpiece (14),
with a control device (21) which is configured to perform the following steps:
(a) measurement of several measurement points (M) along the first contour geometry (K1) and the second contour geometry (K2),
(b) determination of a first substitute element (G1) for the first contour geometry (K1) using at least one measurement point (M) in the region of the first contour geometry (K1),
(c) determination of a second substitute element (G2) for the second contour geometry (K2) using at least one measurement point (M) in the region of the second contour geometry (K2),
(d) calculation of the position and/or size of the first and/or the second substitute element (G2) under the boundary condition that the first substitute element (G1) and the second substitute element (G2) adjoin each other tangentially,
(e) determination of the position of the first transition point (U1) at the point at which the first and the second substitute element (G2) adjoin each other tangentially.

14. Contour meter (10) according to claim 13, **characterised in that** the control device is also configured to repeat steps (b) to (e) using other or additional measurement points (M) for determining the first substitute element (G1) and/or the second substitute element (G2) until the position change (D) between two successive position determinations of the first transition point (U1) is less than a predefined change threshold (Dmax).

15. Contour meter according to claim 13, **characterised in that** the sensing device (11) has a tactile or optical measurement sensor (12) which can be moved along the workpiece contour (13) to be measured.

## Revendications

1. Procédé de mesure de contour d'une pièce (14) présentant une première géométrie de contour (K1) et une deuxième géométrie de contour (K2) et un premier point de transition (U1) où la première et la deuxième géométrie de contour (K1, K2) se joignent l'une à l'autre, la jonction devant se faire tangentiellement au premier point de transition (U1), comprenant les étapes suivantes :
(a) mesure de plusieurs points de mesure (M) le long de la première géométrie de contour (K1) et de la deuxième géométrie de contour (K2),
(b) détermination d'un premier élément de remplacement (G1) pour la première géométrie de contour (K1) à l'aide d'au moins un point de mesure (M) dans la région de la première géométrie de contour (K),
(c) détermination d'un deuxième élément de remplacement (G2) pour la deuxième géométrie de contour (K2) à l'aide d'au moins un point de mesure (M) dans la région de la deuxième géométrie de contour (K2),
(d) calcul de la position et/ou de la taille du premier élément de remplacement (G1) et/ou du deuxième élément de remplacement (G2) sous la condition aux limites que le premier élément de remplacement (G1) et le deuxième élément de remplacement (G2) se joignent l'un à l'autre tangentiellement,
(e) détermination de la position du premier point de transition (U1) à l'endroit où le premier élément de remplacement (G1) et le deuxième élément de remplacement (G2) se joignent l'un à l'autre tangentiellement.

2. Procédé selon la revendication 1, **caractérisé en ce que** les étapes (b) à (e) sont répétées, en utilisant chaque fois d'autres points de mesure (M) ou des points de mesure supplémentaires pour la détermination du premier élément de remplacement (G1) et/ou du deuxième élément de remplacement (G2), jusqu'à ce que la variation de position (D) entre deux déterminations de position successives du premier point de transition (U1) soit plus petite qu'une valeur seuil de variation (Dmax) prédéfinie.

3. Procédé selon la revendication 1, **caractérisé en ce que** la pièce (14) à mesurer présente une troisième géométrie de contour (K3) qui se joint à la deuxième géométrie de contour (K2) en un deuxième point de transition (U2), la jonction à l'endroit du deuxième point de transition (U2) devant se faire tangentiellement, le calcul, à l'étape (d), de la position et/ou de la taille du premier élément de remplacement (G1) et/ou du deuxième élément de remplacement (G2) et/ou du troisième élément de remplacement (G3) étant effectué sous la condition aux limites qu'aussi bien le premier et le deuxième élément de remplacement (G1, G2) que le deuxième et le troisième élément de remplacement (G2, G3) se joignent l'un à l'autre tangentiellement.

4. Procédé selon la revendication 1, **caractérisé en ce que** l'on associe, en tant qu'élément de remplacement (G1, G2, G3, G4), un cercle à une géométrie de contour (K1, K2, K3, K4) s'étendant le long d'un arc de cercle.

5. Procédé selon la revendication 4, **caractérisé en ce que** pour la détermination du cercle en tant qu'élément auxiliaire de géométrie (G1, G2, G3, G4), on mesure au moins trois points de mesure de la géométrie de contour (K1, K2, K3, K4) associée.

6. Procédé selon la revendication 1, **caractérisé en ce que** l'on associe une droite en tant qu'élément de remplacement (G5) à une géométrie de contour (K5) s'étendant de façon rectiligne.

7. Procédé selon la revendication 6, **caractérisé en ce que** pour la détermination de la droite en tant qu'élément auxiliaire de géométrie (G5), on mesure au moins trois points de mesure de la géométrie de contour (K5) associée.

8. Procédé selon la revendication 1, **caractérisé en ce que** lors de la détermination d'un élément de remplacement (G1), on n'utilise que des points de mesure (M1, M2, M3) qui présentent une distance minimale (A) par rapport au point de transition (U1) ou par rapport aux points de transition où la géométrie de contour (K1) associée à l'élément de remplacement (G1) se joint à une géométrie de contour (K2) adjacente.

9. Procédé selon la revendication 8, **caractérisé en ce que** la distance minimale est variable et est réduite à mesure que la variation de position entre deux calculs successifs du point de transition concerné diminue.

10. Procédé selon la revendication 1, **caractérisé en ce qu'**après la détermination du point de transition (U) à l'aide des éléments de remplacement (G) déterminés, on détermine un contour de consigne (KS).

11. Procédé selon la revendication 10, **caractérisé en ce que** l'on détermine l'écart entre les points de mesure (M) et le contour de consigne (KS).

12. Procédé selon la revendication 10, **caractérisé en ce que** le contour de consigne (KS) et le contour réel (KM) de la pièce (14), résultant des points de mesure (M), sont représentés graphiquement sur un dispositif d'affichage (23).

13. Appareil de mesure de contour (10) pour la mesure du contour d'une pièce (14) présentant une première géométrie de contour (K1), une deuxième géométrie de contour (K2) et un premier point de transition (U1) où la première géométrie de contour (K1) et la deuxième géométrie de contour (K2) se joignent l'une à l'autre, la jonction devant se faire tangentiellement au premier point de transition (U1),
comprenant un dispositif de palpage (11) pour la mesure de plusieurs points de mesure (M) le long du contour (13) à mesurer de la pièce (14),
comprenant un dispositif de commande (21) qui est conçu pour exécuter les étapes suivantes :
(a) mesure de plusieurs points de mesure (M) le long de la première géométrie de contour (K1) et de la deuxième géométrie de contour (K2),
(b) détermination d'un premier élément de remplacement (G1) pour la première géométrie de contour (K1) à l'aide d'au moins un point de mesure (M) dans la région de la première géométrie de contour (K1),
(c) détermination d'un deuxième élément de remplacement (G2) pour la deuxième géométrie de contour (K2) à l'aide d'au moins un point de mesure (M) dans la région de la deuxième géométrie de contour (K2),
(d) calcul de la position et/ou de la taille du premier et/ou du deuxième élément de remplacement (G2) sous la condition aux limites que le premier élément de remplacement (G1) et le deuxième élément de remplacement (G2) se joignent l'un à l'autre tangentiellement,
(e) détermination de la position du premier point de transition (U1) à l'endroit où le premier et le deuxième élément de remplacement (G2) se joignent l'un à l'autre tangentiellement.

14. Appareil de mesure de contour (10) selon la revendication 13, **caractérisé en ce que** le dispositif de commande est conçu pour exécuter les étapes (b) à (e), en utilisant chaque fois d'autres points de mesure (M) ou des points de mesure supplémentaires pour la détermination du premier élément de remplacement (G1) et/ou du deuxième élément de remplacement (G2), jusqu'à ce que la variation de position (D) entre deux déterminations de position successives du premier point de transition (U1) soit plus petite qu'une valeur seuil de variation (Dmax) prédéfinie.

15. Appareil de mesure de contour selon la revendication 13, **caractérisé en ce que** le dispositif de palpage (11) présente un palpeur de mesure (12) tactile ou optique pouvant être déplacé le long du contour de pièce (13) à mesurer.
